# EUROPEAN PATENT APPLICATION

(11) **EP 4 471 185 A1**
(43) Date of publication of application: **04.12.2024**
(21) Application number: 23181436.9
(22) Date of filing: 26.06.2023
(51) Int. Cl.: C25B 1/04, C25B 11/047, C04B 35/56, C04B 41/00, C04B 41/53, C04B 41/91, B22F 3/16, B22F 3/23, B22F 3/24, B22F 7/06, C22C 29/02, C22C 29/16, C22C 32/00, B22F 3/02, B22F 3/04, C22C 29/06

(54) **METHODS OF OBTAINING ELECTRODES COMPRISING A MAX-PHASE-CONTAINING COMPOSITE AND USES THEREOF**

(30) Priority: 31.05.2023 PT 2023118685
(71) Applicant: Universidade de Aveiro, 3810-193 Aveiro (PT)
(72) Inventor: KOVALEVSKY (KAVALEUSKI), ANDREI, 3810-193 Aveiro (PT); SERGIIENKO, SERGII, 3810-193 AVEIRO (PT); LOPES, DANIELA, 3810-193 AVEIRO (PT)
(74) Representative: Couto, Cláudia

(57) **Abstract**

The present invention provides methods for obtaining MAX-phase and MXene-containing composite electrodes for enhancing the hydrogen evolution reaction (HER) during the electrolysis process. The methods involve producing a MAX-phase-containing composite material to be used in the production of an electrode. The MAX-phase-containing composite material gradually etches in an alkaline or acidic electrolyte during the electrolysis process, forming MXene-containing composite material with an enhanced HER performance. The formation of MXene layers can be further facilitated by HER. The overall performance of the HER electrode is thus continuously improved with time. The invention offers a practical and effective solution for improving the efficiency and durability of HER electrodes in industrial electrolysers.

## Description

### TECHNICAL FIELD OF THE INVENTION

This invention relates to the field of electrocatalysis, specifically to the design, preparation and improvement of the hydrogen evolution electrodes for electrochemical water splitting under alkaline or acidic conditions. The invention focuses on methods that enables the continuous improvement of electrode performance, offering a more efficient and practical solution for hydrogen production in industrial applications.

### SUMMARY OF THE INVENTION

The present invention provides methods that allow for the continuous improvement of the performance of an electrode for hydrogen evolution reaction (HER) during the electrolysis process, utilising a MAX-phase-containing composite component that undergoes continuous etching in an alkaline or acidic electrolyte, leading to the formation of MXene, which enhances the electrode performance. The invention is versatile, encompassing different embodiments that enable MXene formation and improved electrode performance, overcoming limitations and challenges associated with the current state of the art, and offering a more effective and practical solution for industrial electrolysis processes.

Three aspects of the invention are presented.

In the first embodiment, a method for the preparation of a composite electrode comprising a MAX-phase-containing composite suitable for use for hydrogen evolution reaction (HER) in an alkaline or acidic electrolyte. The gradual etching of the MAX-phase present in the electrode composition in an alkaline or acidic electrolyte results in the formation of MXene-containing composite material, improving the electrochemical performance of the electrode.

In the second embodiment, an alternative approach for incorporating the MAX-phase-containing composite material into an electrode is disclosed. The method involves mixing the powder of the MAX-phase-containing composite material with nickel powder, where Ni represents the main component responsible for electrode activity and acts as a support for the MAX-phase-containing composite material. The mixing is followed by compaction and sintering steps for electrode consolidation. The resulting electrode is primarily composed of Ni, a typical electrode material for industrial alkaline electrolysis. During electrolysis, the MAX-phase-containing composite material present in the electrode undergoes gradual etching, leading to the formation of MXene and continuous improvement of the electrode performance.

In the third embodiment, the composite electrodes obtained according to the first embodiment or the second embodiment are used for hydrogen evolution reaction during the electrolysis process in alkaline or acidic conditions and show continuous improvement of the performance.

### BACKGROUND OF THE INVENTION

The primary challenge in the widescale adoption of renewable energy is its variable or intermittent nature, which imposes limitations on its integration into electric grid networks. However, this energy can be exploited for water electrolysis to produce green hydrogen, a sustainable fuel with no carbon footprint, the highest enthalpy of combustion, and water as the only by-product of energy release. The electrolysis under acidic conditions is kinetically fast and is widely considered a promising option for producing H₂. The main challenge of this technology is the poor stability of most electrode materials. Alkaline electrolysers offer other advantages for industrial applications, as they utilise non-noble metal electrocatalysts and avoid cost and stability issues related to corrosive acidic conditions. Efficient and affordable electrocatalysts are required for both hydrogen and oxygen evolution reactions at the cathode and anode, respectively. The hydrogen evolution reaction (HER) in an alkaline medium faces sluggish reaction kinetics due to the additional water dissociation step.

In industrial alkaline electrolysers, Ni-based electrodes are commonly used as cathodes for hydrogen production because of their relatively low cost and corrosion resistance under strongly alkaline conditions. Various other materials, including alloys, transition metal oxides, nitrides, dichalcogenides, sulphides, phosphides, carbides, and borides, have been tested as HER electrocatalysts at the laboratory scale [1]. Their potential use in industrial electrolysers depends on the costs associated with their production and integration into practical electrolysis systems, as well as performance and durability concerns.

MXenes, a prominent family of materials, represent two-dimensional (2D) transition metal carbides and nitrides discovered in 2011. In an MXene, n+1 layers of transition metals M are interleaved with n layers of X element (C or N), with an overall composition Mₙ₊ₗXₙTₓ [2]. The Tₓ represents the surface -O, -OH, -F, and/or -Cl terminations. This structure offers a unique combination of high active surface area, metallic/semiconducting behaviour, and hydrophilicity, leading to outstanding performance in electrochemical applications, including HER electrocatalysts. Traditional MXene synthesis is based on the selective etching of the A element (Al) from the precursor MAX phase M(n+1)AXₙ, using hazardous hydrofluoric acid. Various electrode concepts have been employed to study the extraordinary electrochemistry of MXenes at the lab scale, involving separate MXene preparation and deposition on a suitable electrode surface. Although these approaches enable the evaluation of electrode mechanisms and accurate comparison of different MXene-based electrocatalysts, they are not yet suitable for industrial applications.

In previous work [3], practical MXene-boosted HER electrode concepts were proposed, involving powder metallurgy approaches such as co-pressing of pre-prepared MXene powder with Ni or co-pressing of the MAX phase with Ni powder, followed by sintering and etching in HF or NaOH. In another approach, composite nano-Ni/Al-Ni/TiC/Ti₃C₂(OH)x MXene electrodes were prepared by etching the MAX phase synthesised through self-propagation high-temperature synthesis (SHS). A significant improvement in electrocatalytic activity towards HER was observed for several configurations. However, all these approaches involve a separate etching step for the corresponding MAX phase before using it as an HER evolution electrocatalyst. These approaches do not target continuous improvement of the HER electrode performance during the electrolysis process. Etching of the MAX phase can also be performed electrochemically [4], but in electrolytes that are unsuitable for industrial electrochemical water splitting. Moreover, electrodes containing pre-prepared MXenes may experience microstructural degradation due to agglomeration/restacking and oxidation, leading to the irreversible deterioration of their properties.

The objective of the present invention is to address and improve upon at least one of the aforementioned problems. By providing methods for producing an electrode for hydrogen evolution and continuous improvement of its performance during the electrolysis process, this invention aims to overcome the limitations and challenges associated with the current state of the art, offering a more effective and practical solution for industrial applications.

### GENERAL DESCRIPTION OF THE INVENTION

Disclosed herein are methods that allow for obtaining a MAX-phase and MXene-containing composite material for the hydrogen evolution electrode and for continuous improvement of its performance during the electrolysis process. The said electrolysis process is performed under alkaline or acidic conditions. In the context of the present invention, a MAX phase can be defined as a family of ternary carbides and nitrides Mₙ₊₁AXₙ (*n*=1-3) with a layered structure, where M is an early transition metal, A is an element from the groups 13-16, and X is carbon and/or nitrogen. The term MXene refers to the fast-growing family of 2D materials Mₙ₊₁XₙTₓ in which *n+1* layers (*n*=1-3) of early transition metals are interleaved with n layers of carbon or nitrogen. The *Tₓ* in the formula represents the surface termination, such as OH, O, F and Cl. The MXene can be synthesised from the MAX phase by selective etching of A element under acidic conditions (e.g., HF) and alkaline conditions (e.g., NaOH, KOH). Stacked MXene layers bonded by the weak van der Waals forces can be further delaminated to obtain single-layer or few-layer MXene flakes. Delamination can be achieved by mechanical exfoliation, sonication, or intercalation of various molecules or ions between the MXene layers. The delamination increases the available surface area, which is favourable for electrocatalysis.

In the present invention, the term MAX-phase containing composite material describes a multi-component mixture formed during the synthesis of MAX phase from single *M, A, Me* and *X* elemental precursors. *Me* is selected from the transition metals which cannot be incorporated in MAX phase and are able to alloy with aluminium and/or to act as an additional electrocatalytically-active component. The term MXene-containing composite material refers to a multi-component mixture formed by the etching of MAX-phase containing composite material, followed by at least partial transformation of MAX phase to MXene.

In the context of the present invention, the term performance of an electrode includes electrocatalytic activity, electrode stability and electrical conductivity, and mainly refers to the electrocatalytic activity.

The present invention provides methods that allow for obtaining a MAX-phase and MXene-containing composite material for the hydrogen evolution electrode showing continuous improvement in the performance during the electrolysis process under alkaline or acidic conditions,. According to this invention, the MAX-phase-containing composite material is present in the composition of the HER electrode. It is gradually etched in an alkaline or acidic electrolyte during the electrolysis process, forming MXene-containing composite material with an enhanced HER performance. As compared to traditional etching, the formation of MXene layers can be facilitated by the mechanical action provided by the formation of hydrogen gas. The performance of the hydrogen evolution electrode is continuously improved through the *in-situ* formation of MXene during the electrolysis process under alkaline or acidic conditions. Thus, introducing an appropriate MAX phase to the HER electrode composition allows gradual improvement of the electrode performance during the electrolysis process.

In one embodiment of the invention, the MAX-phase containing composite material is synthesised by mixing appropriate proportions of *M, A, Me* and X elemental precursors, compacting the mixture in the shape of target HER electrode and subjecting the mixture to high-temperature processing under controlled conditions, such as sintering or self-propagation high-temperature synthesis (SHS). The resulting composite electrode comprises the MAX phase, along with other components formed during the synthesis, such as binary carbides and intermetallic compounds. Thus said, the resulting electrode comprises a MAX-phase-containing composite material. Such an electrode can be directly used for HER in alkaline or acidic electrolysers.

In some embodiments, such an electrode can be partially etched in a concentrated alkaline or acidic solution separately from the electrolysis system, in order to form a certain amount of MXene-containing composite material at the surface. The presence of MXene will improve the base performance of the electrode towards HER. The innovative aspect of this embodiment lies in the fact that the remaining MAX phase will continue to etch during the electrolysis process under alkaline or acidic conditions, gradually transforming into MXene and enhancing the electrode's performance. Another innovative aspect is that the etching can be facilitated by the mechanical action provided by the formation of hydrogen gas during the electrolysis process. This approach addresses the challenge of developing efficient, cost-effective and durable electrocatalysts for hydrogen evolution under alkaline or acidic conditions.

In another embodiment of the invention, a composite electrode comprising both MAX-phase-containing composite material and nickel powder is disclosed as suitable to be the target electrode structure for HER during the electrolysis process. Nickel is a typical material for HER electrodes in industrial alkaline electrolysers, offering cost-effective and corrosion-resistant properties. To form the composite electrode, the MAX-phase-containing composite material is mixed with nickel powder in appropriate proportions. The mixture is then co-pressed in the desired electrode shape and sintered to achieve a solid, robust structure. Upon using such a composite electrode for HER under alkaline or acidic conditions, the MAX-phase-containing composite material within the electrode will gradually etch during the electrolysis process. This etching leads to the *in-situ* formation of MXene at the electrode's surface, which subsequently enhances the performance of the overall electrode during electrolysis. The formation of hydrogen bubbles during HER can further facilitate the formation of MXene layers and expand the surface area of the electrode during the electrolysis process. The integration of nickel as a primary component, coupled with the continuous formation of MXene during electrolysis in this embodiment, offers an innovative approach to improving the efficiency and durability of HER electrodes in industrial electrolysers.

### DESCRIPTION OF THE FIGURES

**Figure 1A** shows a photographic image of a mixture of elemental components used in Example and compacted as a disc electrode for further high-temperature processing under controlled conditions.
**Figure 1B** shows a photographic image of Mo6Na sample, as described in the Example (sample Mo6Na).
**Figure 2** shows XRD patterns of the Mo6 and Mo6Na electrode samples.
**Figure 3** shows the EDS mapping results for the sample Mo6, as described in the Example.
**Figure 4A** shows the microstructure of the sample Mo6, as described in the Example.
**Figure 4B** illustrates the porous microstructure of the Mo6Na sample, as described in the Example.
**Figure 4C** shows the typical microstructure of Mo6Na sample after using it as a HER electrode in an alkaline electrolysis process for 4 days, as described in the Example (sample Mo6Na after 4 days of electrolysis). The arrows show multilayer MAX phase crystals with an edge-on orientation towards the reader. These crystals have been partially etched along the perimeter, revealing the presence of MXene at their edges.
**Figure 5** demonstrates HER polarisation curves recorded at a scan rate of 10 mV/s for the following samples: pure Nickel, Mo6, Mo6Na, and Mo6Na after 4 days electrolysis.
**Figure 6** shows Tafel plots for the following samples: pure Nickel, Mo6, Mo6Na, and Mo6Na after 4 days of electrolysis.
**Figure 7** shows the time dependence of the potential of Mo6Na electrode during alkaline electrolysis under a constant current of 1 A.

### DESCRIPTION OF EMBODIMENTS OF THE INVENTION

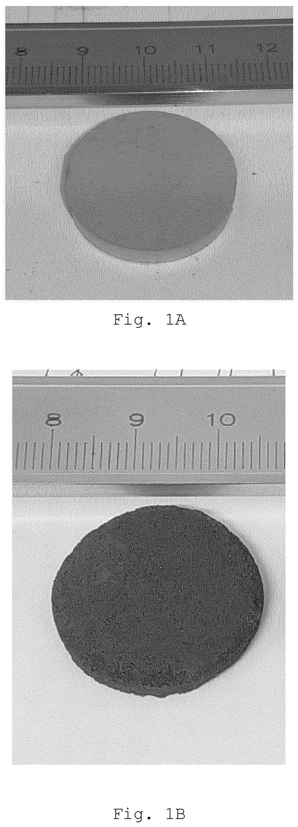

The following embodiments of the present invention are supported by the experimental data shown in Figures 1 to 7.

In the first embodiment of the invention, it is provided one method to obtain a composite electrode as a target electrode for use in the electrolysis process under alkaline or acidic conditions.

The method to obtain an composite electrode comprising a MAX-phase-containing composite material for use as a target electrode in electrolysis process under alkaline or acidic conditions, comprises the following steps:
- Providing a MAX-phase-containing composite material by preparing a mixture comprising M, A, Me, and X elemental precursors;
- The mixture of the precursors is compacted in the shape of a target HER electrode using uniaxial pressing between 10-50 MPa, or cold isostatic pressing between 150-300 MPa;
- The obtained compact is subjected to high-temperature processing by sintering or self-propagation high-temperature synthesis (SHS), to obtain the composite electrode.

In one embodiment, in the first step:
M represents an early transition metal selected from, but not limited to Ti, V, Cr, Nb, or Mo, or mixtures thereof;
A is an element selected from groups 13-16 of the periodic table, preferably Al or Ga;
Me is a transition metal selected from, but not limited to Ni, Cu, Zn, or mixtures thereof, which is not capable to form MAX phase but can form alloys with A element and/or improve the overall electrocatalytic activity, preferably Ni; and
X is carbon and/or nitrogen. In one embodiment, X is preferably carbon.

In one embodiment, the molar ratio between the components M:A:X:Me varies in the range 2-3:1-10:2-4:0.1-4, respectively.

The A element is present in a significant stoichiometric excess to facilitate the formation of MAX phase and etching in alkaline or acidic electrolyte.

In one embodiment, the range of suitable sintering temperatures varies between 500-2000°C during 0.1-10 h, with inert atmosphere selected from Ar or He.

In one embodiment, the SHS step is carried out by local sintering of the compact placed inside an alumina crucible with the carbon powder to prevent oxidation. The SHS is carried out in air, Ar or He atmospheres.

Afterwards, the MAX-phase-containing composite material is formed, and the resulting electrode can be directly used for HER in alkaline or acidic electrolysers.

In one embodiment, the electrode comprising the MAX-phase-containing composite material is optionally partially etched separately from the electrolysis system to form a superficial layer of MXene-containing composite material. The etching can be performed under alkaline or acidic conditions.

In one embodiment, the obtained composite electrodes can be used for HER during the electrolysis process performed from 20°C up to 100 °C in an alkaline or acidic medium.

Gradual etching of MAX phase in MAX-phase-containing composite material in the alkaline or acidic electrolyte results in the formation of MXene-containing composite material, where MXene increases the electrochemical performance of the electrode. The formation of the MXene layers can be facilitated by the mechanical action provided by the formation of hydrogen bubbles during the electrolysis process.

In the second embodiment of the invention, a composite electrode comprising both MAX-phase-containing composite material and a transition metal as a primary component is prepared to serve as the target electrode for HER during the electrolysis process, allowing for gradual improvement of its performance.

A method to obtain an composite electrode comprising a MAX-phase-containing composite material and a transition metal for use as a target electrode in electrolysis process under alkaline or acidic conditions, comprises the following steps:
- Providing a MAX-phase-containing composite material by:
   - Preparing a mixture comprising M, A, Me, and X elemental precursors;
   - The mixture of the precursors is compacted in the shape of a target HER electrode using uniaxial pressing between 10-50 MPa, or cold isostatic pressing between 150-300 MPa;
   - The obtained compact is subjected to high-temperature processing by sintering or self-propagation high-temperature synthesis (SHS), to form the composite electrode comprising a MAX-phase-containing composite material;
- The obtained MAX-phase-containing composite material is converted into fine powder by using any suitable means for the purpose, to obtain an average particle size between 1 and 50 pm;
- Between 3 to 80% wt. of the MAX-phase-containing composite material powder is mixed with the remaining wt. % being a transition metal powder;
- The resulting mixture is compacted in the shape of a target HER electrode using uniaxial pressing between 10-50 MPa or cold isostatic pressing between 150-300 MPa;
- The resulting compact is subjected to sintering under inert atmosphere at a temperature between 400-900°C, duration between 0.1-10 h, and Ar or He atmosphere, to obtain the target composite electrode.

In one embodiment, the transition metal is nickel.

In one embodiment, the first step of providing a MAX-phase-containing composite material is carried out in the same manner as the steps of the method of the first embodiment.

In one embodiment, M represents an early transition metal or mixtures thereof; A is an element selected from groups 13-16 of the periodic table; Me is a transition metal or mixtures thereof; and X is carbon and/or nitrogen.

In one embodiment, the molar ratio between the components M:A:X:Me varies in the range 2-3:1-10:2-4:0.1-4, respectively.

In one embodiment, the range of sintering temperatures in the first step varies between 500-2000°C during 0.1-10 h, and the inert atmosphere is selected from Ar or He.

In one embodiment, the shape of the compact in this method is arbitrary.

In one embodiment, the MAX-phase-containing composite material is converted into powder by grinding, milling or any other suitable technique.
8. In one embodiment, the self-propagation high-temperature synthesis step is carried out by local sintering of the compact placed inside an alumina crucible with the carbon powder to prevent oxidation, conducted in air, Ar or He atmospheres.

In one embodiment, the powder of the MAX-phase-containing composite material is optionally partially etched in a concentrated alkaline or acidic solution to form a superficial layer of MXene-containing composite material.

In one embodiment, the composite electrodes obtained by this method can be used for HER during the electrolysis process performed from 20°C to 100°C.

Gradual etching of MAX phase in MAX-phase-containing composite material in the alkaline or acidic electrolyte results in the formation of MXene-containing composite material, where MXene increases the electrochemical performance of the electrode. Mechanical action provided by the evolving hydrogen bubbles can facilitate the formation of MXene layers and further increase the available surface area and electrochemical performance towards HER.

In a third embodiment of the present invention, it is provided a method for continuous improvement of the performance of a hydrogen evolution reaction electrode during the electrolysis process under alkaline or acidic conditions, the method comprising the steps of:
- providing a composite electrode comprising a MAX-phase-containing composite material according to the method of the first embodiment or the method of the second embodiment;
- using the composite electrode during the electrolysis process in an alkaline or acidic electrolyte while the MAX-phase composite is gradually etched during electrolysis, promoting the MXene-containing composite material formation.

The composite electrodes obtained according to the method of the first embodiment or the method of the second embodiment are suitable to be used for the hydrogen evolution reaction during the electrolysis process under alkaline or acidic conditions. In this embodiment the composite electrodes comprising a MAX-phase-containing composite material are produced according to the first embodiment or the second embodiment.

### EXAMPLE

The methods disclosed in the present invention were employed to prepare an HER electrode based on Mo- and Ti-containing MAX phases and corresponding composite materials. Carbon black and metallic powders of Ti, Mo, Al, and Ni were mixed in a proportion of Ti:Mo:Al:Ni:C 1:2:7:2 and compacted by uniaxial pressing at 20 MPa to form a disc-shaped electrode (Fig. 1A). The compacted electrode was sintered at 1500°C for 3 hours in an Ar atmosphere, resulting in the Mo6 sample electrode composed of MAX-phase-containing composite material. Prior to using the Mo6 electrode for HER in alkaline conditions, it was further etched in 10 M NaOH at room temperature for 60 days. This process formed a certain amount of MXene-containing composite material on the electrode surface, providing enhanced initial performance. The modified electrode is further referred to as Mo6Na. The processing steps ensured the maintenance of the electrode's disc shape (Fig. 1B).

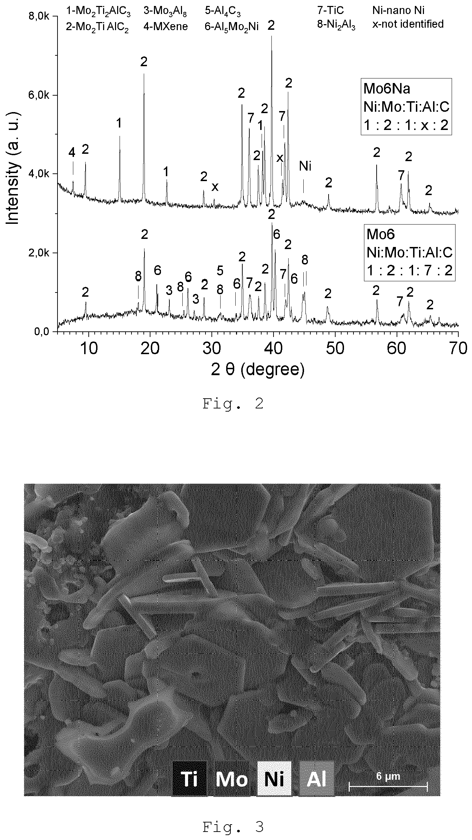

The XRD patterns of the Mo6 and Mo6Na electrode samples are depicted in Fig. 2, confirming the complex phase composition of MAX-phase-containing (sample Mo6) and MXene-containing (sample Mo6Na) composite materials. EDS elemental mapping results (Fig. 3) further support these findings. The Mo6 sample contains Mo₂TiAlC₂ MAX phase, titanium and aluminium carbides, and Ni₂Al₃, Mo₃Al₈ and Al₅Mo₂Ni alloys. The etched MXene-containing composite electrode sample Mo6Na, in addition to Mo₂TiC₂(OH)_{X} MXene, contains Mo₂Ti₂AlC₃ and Mo₂TiAlC₂ MAX phases, titanium carbide, and nanostructured Ni.

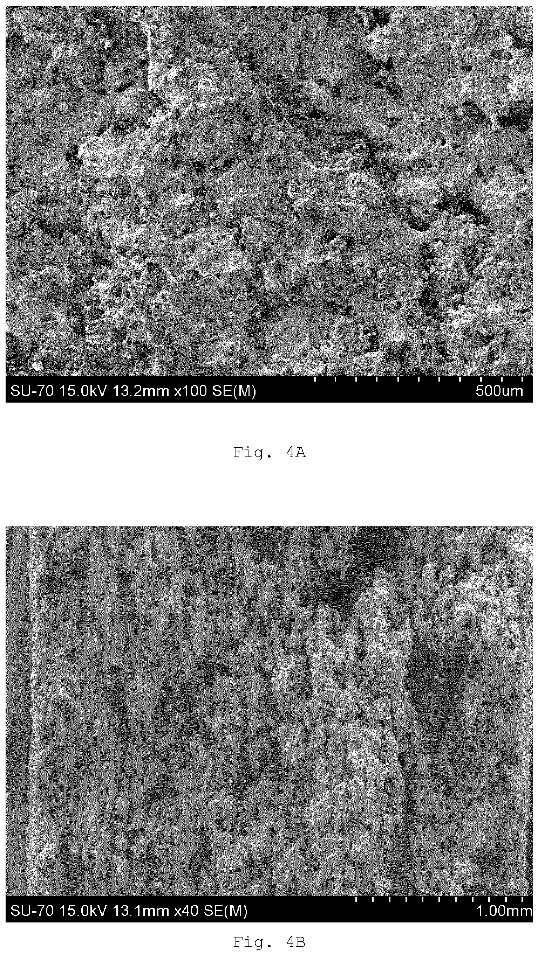

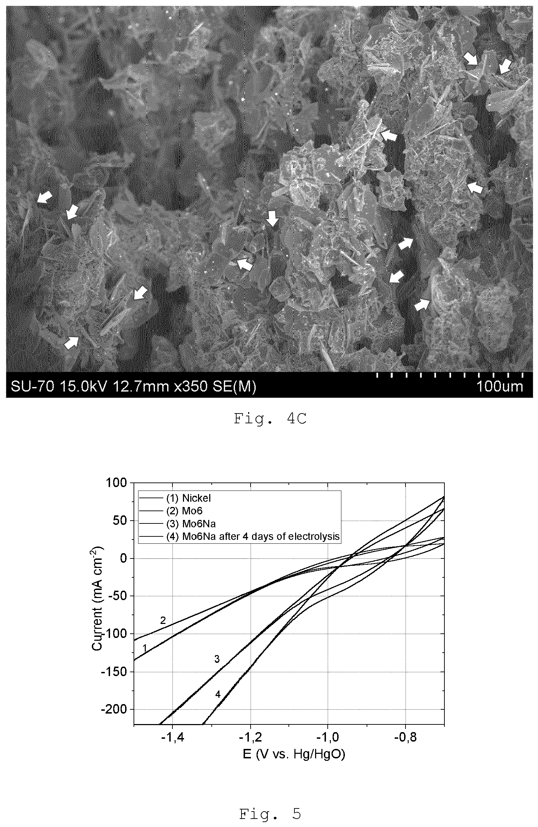

The Mo6 electrode exhibits a relatively dense microstructure (Fig. 4A), with some open pores resulting from significant phase transformations during high-temperature processing of the elemental precursor mixture. The additional etching step, besides forming MXene, considerably increases porosity and expands the electrode surface (Fig. 4B), enhancing its suitability for efficient HER. Pores primarily form due to Al leaching from Ni₂Al₃, Mo₃Al₈ and Al₅Mo₂Ni alloys. No traces of these alloys were detected by XRD in the Mo6Na sample (Fig. 2), indicating that further etching of the formed MXene-containing composite material during the electrolysis process is only possible from Mo₂Ti₂AlC₃ and Mo₂TiAlC₂ MAX phases. Fig. 4C displays the SEM image of the Mo6Na sample electrode after four days of the electrolysis process, revealing various flakes and thin-layered structures. These structures likely correspond to multilayer MAX phase crystals with an edge-on orientation towards the reader, which are partially etched and contain MXene.

Cyclic voltammetry (CV) curves for various sample electrodes are illustrated in Fig. 5. The pure nickel electrode, used as a reference, has a similar shape and geometrical parameters compared to Mo6 and Mo6Na electrodes. The Mo6Na sample electrode exhibits notably higher current densities at the same cathodic potential applied after 4 days of electrolysis, indicating that its performance improves over time. The current density observed for the Mo6Na electrode is significantly higher compared to pure Ni and Mo6 electrodes.

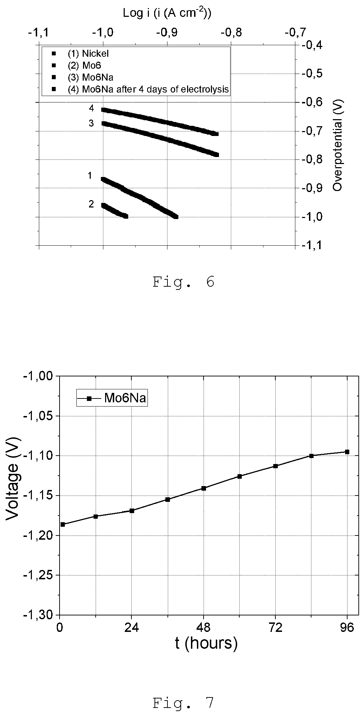

The Tafel plots (Fig. 6) demonstrate that the Mo6Na sample electrode, after 4 days of electrolysis, exhibits lower overpotentials compared to the Mo6Na sample electrode and, especially, compared to Ni and Mo6 sample electrodes. The applied voltage required to maintain a constant electrical current in an alkaline water electrolysis system producing hydrogen from water and utilising the Mo6Na sample electrode decreases over time (Fig. 7). This reduction is attributed to the continuous improvement of the Mo6Na electrode's performance during the electrolysis process.

### CITATIONS LIST

[1] J. Zhu, L. Hu, P. Zhao, L.Y.S. Lee, K.-Y. Wong, Recent Advances in Electrocatalytic Hydrogen Evolution Using Nanoparticles, Chem Rev. 120 (2020) 851-918. https://doi.org/10.1021/acs.chemrev.9b00248.
[2] Y. Gogotsi, B. Anasori, The Rise of MXenes, ACS Nano. 13 (2019) 8491-8494. https://doi.org/10.1021/acsnano. 9b0 63 94.
[3] S.A. Sergiienko, D. V. Lopes, G. Constantinescu, M.C. Ferro, N.D. Shchaerban, O.B. Tursunov, V.I. Shkepu, H. Pazniak, N.Y. Tabachkova, E.R. Castellón, J.R. Frade, A. V. Kovalevsky, MXene-containing composite electrodes for hydrogen evolution: Material design aspects and approaches for electrode fabrication, Int J Hydrogen Energy. 46 (2021) 11636-11651. https://doi.org/10.1016/j.ijhydene.2021.01.041.
[4] M. Beidaghi, A. Vahid Mohammadi, Electrochemical Systems Comprising MXenes And MAX Phase Compositions And Methods Of Using The Same, US Patent Application 2018/0309125 A, 2018.

## Claims

**1.** A method to obtain a composite electrode comprising a MAX-phase-containing composite material for use as a target electrode in electrolysis process under alkaline or acidic conditions, comprises the following steps:
- Providing a MAX-phase-containing composite material by preparing a mixture comprising *M, A, Me,* and *X* elemental precursors;
- The mixture of the precursors is compacted in the shape of a target hydrogen evolution reaction electrode using uniaxial pressing between 10-50 MPa, or cold isostatic pressing between 150-300 MPa;
- The obtained compact is subjected to high-temperature processing by sintering or self-propagation high-temperature synthesis, to obtain the composite electrode.

**2.** Method according to the previous claim, wherein M represents an early transition metal or mixtures thereof; A is an element selected from groups 13-16 of the periodic table; Me is a transition metal or mixtures thereof; and X is carbon and/or nitrogen.

**3.** Method according to any of the previous claims, wherein the molar ratio between the components M:A:X:Me varies in the range 2-3:1-10:2-4:0.1-4, respectively.

**4.** Method according to any of the previous claims, wherein the range of sintering temperatures varies between 500-2000°C during 0.1-10 h, with inert atmosphere selected from Ar or He.

**5.** Method according to any of the claims 1 to 3, wherein the self-propagation high-temperature synthesis step is carried out by local sintering of the compact placed inside an alumina crucible with the carbon powder to prevent oxidation, conducted in air, Ar or He atmospheres.

**6.** Method according to any of the previous claims, wherein the composite electrode is partially etched separately from the electrolysis system to form a superficial layer of MXene-containing composite material and under alkaline or acidic conditions.

**7.** A method to obtain a composite electrode comprising a MAX-phase-containing composite material and a transition metal for use as a target electrode in electrolysis process under alkaline or acidic conditions, comprises the following steps:
- Providing a MAX-phase-containing composite material by:
- Preparing a mixture comprising M, A, Me, and X elemental precursors;
- The mixture of the precursors is compacted in the shape of a target hydrogen evolution reaction electrode using uniaxial pressing between 10-50 MPa, or cold isostatic pressing between 150-300 MPa;
- The obtained compact is subjected to high-temperature processing by sintering or self-propagation high-temperature synthesis, to form the composite electrode comprising a MAX-phase-containing composite material;
- The obtained MAX-phase-containing composite material is converted into fine powder by using any suitable means for the purpose, to obtain an average particle size between 1 and 50 pm;
- Between 3 to 80% wt. of the MAX-phase-containing composite material powder is mixed with the remaining wt.% being a transition metal powder;
- The resulting mixture is compacted in the shape of a target hydrogen evolution reaction electrode using uniaxial pressing between 10-50 MPa or cold isostatic pressing between 150-300 MPa;
- The resulting compact is subjected to sintering under inert atmosphere at a temperature between 400-900°C, duration between 0.1-10 h, and Ar or He atmosphere, to obtain the composite electrode.

**9.** Method according to the previous claim, wherein M represents an early transition metal or mixtures thereof; A is an element selected from groups 13-16 of the periodic table; Me is a transition metal or mixtures thereof; and X is carbon and/or nitrogen.

**10.** Method according to any of the claims 7 to 9, wherein the molar ratio between the components M:A:X:Me varies in the range 2-3:1-10:2-4:0.1-4, respectively.

**11.** Method according to any of the claims 7 to 10, wherein the range of sintering temperatures in the first step varies between 500-2000°C during 0.1-10 h, and the inert atmosphere is selected from Ar or He.

**12.** Method according to any of the claims 7 to 10, wherein the self-propagation high-temperature synthesis step is carried out by local sintering of the compact placed inside an alumina crucible with the carbon powder to prevent oxidation, conducted in air, Ar or He atmospheres.

**13.** Method according to any of the claims 7 to 12, wherein the composite electrode powder is partially etched in a concentrated alkaline or acidic solution to form a superficial layer of MXene-containing composite material.

**14.** Method for continuous improvement of the performance of a hydrogen evolution reaction electrode during the electrolysis process under alkaline or acidic conditions, the method comprising the steps of:
- providing a composite electrode comprising a MAX-phase-containing composite material according to the method of the first embodiment or the method of the second embodiment;
- using the composite electrode for HER during the electrolysis process in an alkaline or acidic electrolyte while the MAX-phase composite is gradually etched during electrolysis, promoting the MXene-containing composite material formation.

**15.** Use of a composite electrode comprising a MAX-phase-containing composite material obtained as described in any of the claims 1 to 6 or any of the claims 7 to 13 in the hydrogen evolution reaction under alkaline or acidic conditions.
